# DEMANDE DE BREVET EUROPEEN

(11) **EP 4 840 718 A1**
(43) Date de publication de la demande: **18.11.2026**
(21) Numéro de dépôt: 26174674.7
(22) Date de dépôt: 27.04.2026
(51) Int. Cl.: B61D 23/02, B60R 3/02

(54) **ENSEMBLE D' ACCES POUR VEHICULE, NOTAMMENT VEHICULE DE TRANSPORT, ET VEHICULE AINSI EQUIPE**

(30) Priorité: 12.05.2025 FR 2504981
(71) Demandeur: Faiveley Transport Tours, 37701 Saint Pierre des Corps Cedex (FR)
(72) Inventeur: VAUCELLE, Philippe, 37300 JOUE-LES-TOURS (FR); VAUTIER, Fabien, 37270 VERETZ (FR); DE BAST, Jean-François, 37270 MONTLOUIS-SUR-LOIRE (FR); SALLES, Olivier, 35300 FOUGERES (FR); BRION, Florian, 37390 NOTRE DAME D'OE (FR)
(74) Mandataire: IXAS Conseil

(57) **Abrégé**

Cet ensemble d'accès comprend un logement (1) de réception d'une rampe déployable (3), un seuil d'accès (5) et un volet (7) mobile entre une position de fermeture du logement et une position d'ouverture où il assure une transition entre la rampe et le seuil, ce seuil comportant un corps fixe (50) ainsi qu'un organe d'étanchéité (56) mobile entre une position escamotée et une position relevée où il comprime un joint (222) du véhicule.

Selon l'invention le volet comprend des moyens de déplacement, notamment de type came (76), permettant de déplacer l'organe d'étanchéité (56) depuis sa position escamotée vers sa position relevée, lorsque le volet se déplace depuis sa position d'ouverture vers sa position de fermeture.

Les moyens de déplacement, qui permettent au volet de commander le mouvement du nez, permettent de s'affranchir de la présence d'un organe spécifique dévolu à l'actionnement de ce nez. Par ailleurs, ces moyens de déplacement permettent de synchroniser les mouvements du volet et du nez.

## Description

### Domaine technique de l'invention

La présente invention concerne un ensemble d'accès destiné à équiper un véhicule, afin de faciliter l'embarquement et le débarquement de passagers. Elle concerne également un véhicule, qui est équipé d'un tel ensemble d'accès. La présente invention trouve son application en particulier à des véhicules de transport, notamment de type train, tramway, métro, trolleybus ou encore bus. Elle vise plus spécifiquement, mais non exclusivement, les trains.

### Etat de la technique

Dans l'art antérieur, il existe de nombreux types de dispositifs permettant l'accès à des véhicules, notamment des véhicules ferroviaires. Ces dispositifs, généralement placés au-dessous des portes du véhicule, sont équipés d'une rampe mobile. Cette dernière peut être déplacée, sous l'effet de moyens d'entraînement, entre une position déployée dans laquelle elle permet l'accès au véhicule, ainsi qu'une position escamotée.

Dans EP 2 365 920, la Demanderesse a proposé d'intégrer cette rampe dans un logement, dont l'extrémité tournée vers le quai peut être obturée au moyen d'un volet mobile. Par ailleurs il est prévu des moyens, permettant une liaison mécanique entre cette rampe et ce volet. Lorsque la rampe est escamotée dans le logement, elle est protégée de l'environnement extérieur grâce au volet qui se trouve en position fermée. Lorsque le volet est ouvert au-dessus de la rampe, il forme un plan incliné entre la rampe et le seuil de porte. Ce volet permet ainsi, en compensant le dénivelé présent entre la rampe et le seuil, de faciliter l'accès en particulier aux personnes à mobilité réduite.

La société BODE a proposé, dans EP 4 497 650, une solution dans laquelle une partie du seuil de porte, tel que défini ci-dessus, est montée de manière rotative. En position déployée de la rampe, qui correspond à l'ouverture du volet, la partie mobile du seuil de porte est inclinée vers le bas de manière à être alignée avec le volet et avec la rampe. Cela permet l'accès au véhicule, dont les vantaux sont alors ouverts. En outre, lorsque les vantaux de la porte sont fermés, le seuil s'étend horizontalement afin d'assurer l'étanchéité vis-à-vis de l'extrémité inférieure de ces vantaux.

Les solutions techniques, décrites ci-dessus, présentent cependant certains inconvénients. En particulier elles ne garantissent pas une étanchéité suffisante, notamment vis-à-vis de l'extrémité inférieure des vantaux.

Afin de remédier à ce problème d'étanchéité dans cette zone spécifique, DE 10 2016 125785 au nom de la société Bombardier prévoit d'inclure un élément mobile au niveau du seuil de porte. Dans une position rétractée, correspondant à la circulation des passagers, l'élément mobile est escamoté dans le seuil de porte. En revanche, dans une position déployée correspondant à la fermeture du vantail, cet élément mobile fait saillie de manière à venir en contact avec le joint en regard équipant ce vantail, ce qui contribue à améliorer l'étanchéité. Cette solution implique cependant d'utiliser un actionneur spécifique, assurant le mouvement de l'élément d'étanchéité. Par ailleurs, ce document est muet quant à l'application d'un tel élément d'étanchéité dans un ensemble d'accès équipé d'une rampe reçue dans un logement, susceptible d'être fermé par un volet.

On citera également EP 2 103 469 au nom de la société BODE, dans lequel le seuil est mobile entre une position horizontale, correspondant à la configuration de fermeture du volet, ainsi qu'une position inclinée correspondant à la configuration d'ouverture du volet, dans laquelle ce seuil forme une continuité de surfaces avec la rampe. L'extrémité inférieure de la porte du véhicule est équipée d'un profilé possédant une région d'étanchéité apte à coopérer, lorsque le seuil est horizontal et le volet est fermé, avec une surface d'étanchéité ménagée dans ce seuil. Ce document s'accompagne d'inconvénients spécifiques, liés en particulier à la complexité technique du profilé précité.

Enfin, dans DE 10 2014 208 288 au nom de la société Siemens, une barrette d'étanchéité est montée rotative par rapport au seuil. Ce document prévoit en outre que ce seuil peut être intégré dans un dispositif d'accès, comprenant également une rampe coulissante et un volet, permettant la fermeture du logement de réception de cette rampe. Dans sa position escamotée, qui correspond à la fermeture du volet, la barrette n'entrave pas la libre accessibilité de ce seuil. En revanche, dans sa position déployée qui correspond à l'ouverture du volet, la barrette vient en butée contre un joint porté par l'extrémité inférieure du vantail, de manière à améliorer l'étanchéité. Cette solution implique tout d'abord le même inconvénient que le document Bombardier discuté ci-dessus, à savoir la présence d'un actionneur spécifique. Par ailleurs, si la barrette d'étanchéité est maintenue de façon intempestive dans sa configuration déployée, elle est susceptible d'entraver la libre circulation des passagers.

On citera également EP-A-0 217 265 au nom de la société ALSTHOM, qui concerne un véhicule ferroviaire comprenant un dispositif facilitant l'accès au véhicule lors des arrêts en gare. Ce dispositif comprend une rampe conçue pour être reçue sous le plancher du véhicule lorsque celui-ci est en marche et pour reposer sur un quai lors d'un arrêt en gare, et un mécanisme de guidage et d'entraînement pour la rampe située sous le plancher du véhicule. Selon l'invention objet de cette demande de brevet européen, le dispositif comprend un seuil articulé entre deux positions extrêmes, à savoir une position horizontale lorsque le véhicule est en marche, constituant ainsi une partie du plancher du véhicule, et une position inclinée constituant, avec une partie de la rampe qui est également inclinée, une rampe continue permettant l'accès au véhicule.

Compte tenu de ce qui précède, un objectif de la présente invention est de remédier, au moins partiellement, aux inconvénients de l'art antérieur évoqués ci-dessus.

Un autre objectif de l'invention est de proposer un ensemble d'accès, qui permet d'assurer une circulation commode et sécurisée des voyageurs entre le quai et le véhicule.

Un autre objectif de l'invention est de proposer un tel ensemble d'accès, dont le prix de revient est réduit et dont la structure mécanique est simple, notamment en ce qu'il n'inclut pas d'actionneur spécifique supplémentaire.

Un autre objectif de l'invention est de proposer un tel ensemble d'accès, qui permet une synchronisation satisfaisante entre les différents éléments mobiles dont il est équipé.

### Objets de l'invention

Selon l'invention, au moins un des objectifs ci-dessus est atteint par l'intermédiaire d'un ensemble d'accès (I ; II) à un véhicule (200), notamment un véhicule de transport, comprenant
- un logement (1 ; 101) de réception d'une rampe mobile
- une rampe mobile (3 ; 103), qui est mobile en translation entre une position repliée dans le logement ainsi qu'une position dépliée en dehors du logement
- un seuil d'accès (5 ; 105) s'étendant au-dessus du logement (1 ; 101); et
- un volet (7 ; 107) mobile entre une position de fermeture dans laquelle il ferme une fenêtre (20 ; 120) du logement, et une position d'ouverture dans laquelle il assure une transition entre la rampe et le seuil d'accès,
- le seuil d'accès comportant un corps fixe (50 ; 150), ainsi qu'un organe mobile d'étanchéité (56 ; 156), ledit organe d'étanchéité étant mobile entre une position escamotée vers le bas, dans laquelle il assure une transition entre le corps fixe du seuil et le volet, ainsi qu'une position relevée dans laquelle il fait saillie vers le haut par rapport au corps, position relevée dans laquelle il est apte à coopérer avec un joint (222) porté par l'extrémité inférieure d'une porte (206) dudit véhicule, notamment en comprimant ledit joint,

- cet ensemble d'accès étant caractérisé en ce que ledit volet (7 ; 107) comprend des moyens de déplacement (76 ; 176), permettant de déplacer ledit organe d'étanchéité (56 ; 156) depuis sa position escamotée vers sa position relevée, lorsque le volet se déplace respectivement depuis sa position d'ouverture vers sa position de fermeture.

Selon d'autres caractéristiques de cet ensemble d'accès, prises isolément ou selon toute combinaison techniquement compatible pour l'homme du métier :
- le volet (7 ; 107) est monté de façon rotative par rapport au logement (1 ; 101) et les moyens de déplacement comprennent une came (76 ; 176) appartenant au volet, ladite came étant propre à déplacer l'organe d'étanchéité (56 ; 156) depuis sa position escamotée vers sa position relevée, lors de la rotation du volet.
- l'organe d'étanchéité (56 ; 156) est monté rotatif par rapport au corps (50 ; 150) du seuil autour d'un premier axe longitudinal d'articulation (A57 ; A158).
- le premier axe longitudinal d'articulation (A57) s'étend à distance d'un second axe longitudinal d'articulation (A7), autour duquel le volet (7) est monté de manière rotative par rapport au logement.
- le bord intérieur (57) de l'organe d'étanchéité (56) est articulé sur le corps fixe (50), à distance du rebord extérieur (52) dudit corps fixe.
- la came (76) fait saillie radialement à partir de l'extrémité supérieure (72) du volet.
- le premier axe longitudinal d'articulation (A158) est confondu avec un second axe longitudinal d'articulation (A107), autour duquel le volet (107) est monté de manière rotative par rapport au logement.
- le bord extérieur (158) de l'organe d'étanchéité (156) est articulé sur le rebord extérieur (152) du corps fixe (150).
- la came (176) fait saillie à partir d'une face intérieure du volet, à distance de l'extrémité supérieure (172) dudit volet.
- cet ensemble comprend en outre des moyens de rappel, notamment de rappel élastique (63), permettant de rappeler ledit organe d'étanchéité (56 ; 156) depuis sa position relevée vers sa position escamotée, en l'absence d'action du volet sur l'organe d'étanchéité.
- le corps fixe (50 ; 150) est creusé d'un renfoncement (54 ; 154) ménagé au voisinage du rebord extérieur (52 ; 152) dudit corps, l'organe d'étanchéité (56 ; 156) étant reçu dans ce renfoncement, au moins dans sa position escamotée.
- la largeur utile (156 ; 1156) de l'organe d'étanchéité est comprise entre 10 mm et 60 mm, notamment entre 30 mm et 40 mm.

L'invention a également pour objet un véhicule de transport, notamment du type tramway, métro, bus ou encore trolleybus, comprenant au moins un ensemble d'accès tel que ci-dessus.

### Description des figures

L'invention va être décrite ci-après, en référence aux dessins annexés, donnés uniquement à titre d'exemples non limitatifs, dans lesquels :
[Fig. 1] est une vue de dessus, illustrant de manière schématique un véhicule de transport équipé d'ensembles d'accès conformes à un premier mode de réalisation de l'invention.
[Fig. 2] est une vue en perspective, illustrant à plus grande échelle un ensemble d'accès de la figure 1, dans une configuration où sa rampe est repliée dans son logement et son volet est en position de fermeture.
[Fig. 3] est une vue de côté, illustrant l'ensemble d'accès de la figure 2.
[Fig. 4] est une vue en perspective, analogue à la figure 2, illustrant l'ensemble d'accès selon le premier mode de réalisation de l'invention, dans une configuration où sa rampe a entamé son déploiement.
[Fig. 5] est une vue de côté, illustrant l'ensemble d'accès de la figure 4.
[Fig. 6] est une vue en perspective, analogue aux figures 2 et 4, illustrant l'ensemble d'accès selon le premier mode de réalisation de l'invention, dans une configuration où sa rampe est partiellement dépliée et son volet est en position d'ouverture.
[Fig. 7] est une vue de côté, illustrant l'ensemble d'accès de la figure 6.
[Fig. 8] est une vue en perspective, analogue à la figure 2, illustrant un ensemble d'accès selon un second mode de réalisation de l'invention, dans une configuration où sa rampe est repliée dans son logement et son volet est en position de fermeture.
[Fig. 9] est une vue de côté, illustrant l'ensemble d'accès de la figure 8.
[Fig. 10] est une vue de côté, analogue à la figure 9, illustrant l'ensemble d'accès selon le second mode de réalisation de l'invention, dans une configuration où sa rampe a entamé son déploiement.
[Fig. 11] est une vue de côté, analogue aux figures 9 et 10, illustrant l'ensemble d'accès selon le second mode de réalisation de l'invention, dans une configuration où sa rampe est partiellement dépliée et son volet est en position d'ouverture.

### Description détaillée

Les références numériques suivantes sont utilisées dans la présente description.
I et I' ensembles d'accès - XX axe médian de roulage - 200 véhicule de transport
202 caisse du véhicule - 204 plancher fixe de la caisse - 206 et 208 portes
210 renfoncement - 220 vantail - 222 joint d'étanchéité
I ensemble d'accès selon le premier mode de réalisation
1 logement - 10 fond - 12 aile intérieure -16,18 flancs avant et arrière - 20 fenêtre
3 : rampe - 30 : plaque - 32 : bec d'accostage - 34 : pions - 36 : galet
5 : seuil - 50 : corps - 52 : rebord extérieur de 50 - 54 : renfoncement de 50 - 55 plage
56 : nez - 57,58 bords intérieur et extérieur de 56 - A57 : axe de pivotement de 56
60 : face d'articulation de 50 - 62 : arbre - 63 ressort de torsion
64 et 66 décrochements dans 56 et 50 - 65 et 67 extensions de 56 et 50
7 : volet - A7 : axe de 7 - 70 : lame de 7 - 72, 78 extrémités supérieure et inférieure de 70
74 : arbre physique - 76 : came - 80 : aile de 70
9 : biellette - 91,92 extrémités de 9 - A91, A92 axes d'articulation de 91,92
Il ensemble d'accès selon le second mode de réalisation
Eléments mécaniques de l'ensemble II analogues à ceux de l'ensemble I : + 100
A158 : axe de pivotement de 156 - 164,165 décrochements et extensions de 156
173,175 décrochements et extensions de 107
Fx et F'x forces exercées par ou sur x, avec x = 9, 56, 109, 156
Mx et M'x : mouvements de x, avec x = 3, 7, 56, 76, 103, 107, 156, 176

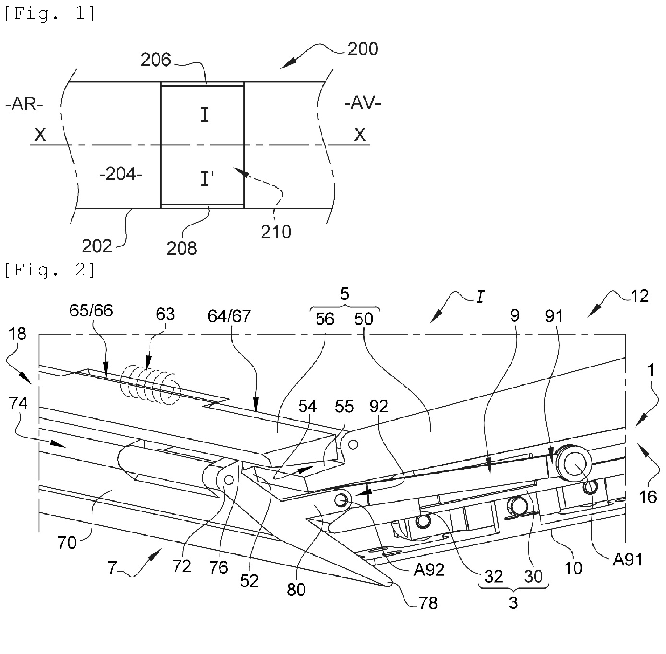

La figure 1 illustre, de manière schématique, un véhicule de transport 200 qui est équipé de deux ensembles d'accès, désignés respectivement par les références I et I', qui sont conformes à un premier mode de réalisation de l'invention. Ce véhicule est par exemple un train, un tramway, un métro, un bus ou encore trolleybus. On note XX l'axe longitudinal, ou axe médian de roulage de ce véhicule. On note également AV et AR l'avant et l'arrière de ce véhicule, en référence au sens de roulage. Dans ce qui suit les orientations géométriques des éléments mécaniques, constitutifs des ensembles d'accès selon l'invention, font référence à cet axe XX.

Sur cette figure 1 on a représenté uniquement de façon simplifiée la caisse 202 de ce véhicule, le plancher fixe 204 de cette caisse, ainsi que deux portes 206 et 208 prévues en regard d'un ensemble d'accès correspondant I et I'. Le plancher fixe 204 est creusé d'un renfoncement transversal 210, dans lequel sont implantés les ensembles I et I'. Dans le présent mode de réalisation, ces ensembles I et I' sont disposés de manière symétrique, par rapport à l'axe de roulage XX. Ils sont habituellement séparés l'un de l'autre par l'intermédiaire d'un longeron central non représenté, appartenant à la caisse du véhicule.

À titre de variante non représentée, on peut prévoir que ce véhicule est équipé d'un unique ensemble d'accès conforme à l'invention. Dans ce cas, il est avantageux que cet ensemble ne s'étende pas sur la totalité de la direction transversale, ou largeur, du véhicule. De façon typique, cet ensemble d'accès unique s'étend alors sur sensiblement la moitié de cette largeur.

On va maintenant décrire, en référence aux figures 2 à 7, la structure de l'ensemble d'accès I, étant entendu que la structure de l'autre ensemble I' est analogue. Cet ensemble d'accès I comprend essentiellement un logement 1, une rampe dépliable 3 reçue dans ce logement, un seuil 5 prévu au niveau de la surface supérieure de ce logement, ainsi qu'un volet 7 permettant la fermeture sélective de ce logement.

Le logement 1 comprend tout d'abord un fond 10 s'étendant transversalement, depuis l'axe de roulage jusqu'au voisinage de la porte 206. Du côté intérieur, c'est-à-dire au voisinage de l'axe XX, le fond 10 est bordé par une aile intérieure 12. Par ailleurs, deux flancs respectivement avant 16 et arrière 18 s'étendent à partir du fond 10. Enfin, du côté extérieur c'est-à-dire au voisinage de la porte 206, l'ossature 1 délimite une fenêtre latérale 20, permettant le passage de la rampe 3.

La rampe 3 comporte tout d'abord une plaque 30, formant corps, dont la forme est globalement rectangulaire. Cette plaque est terminée, à l'opposé de l'axe médian de roulage, par un bec d'accostage 32. Dans la position dépliée de la rampe, ce bec est destiné à venir en contact avec le quai ou, à tout le moins, à proximité de ce dernier. La rampe est avantageusement équipée de moyens non représentés, de type classique, permettant son guidage en translation par rapport aux parois du logement. Par ailleurs le fond 10 du logement est avantageusement muni de galets, dont seul celui 36 est illustré, assurant un déplacement commode de la rampe vis-à-vis de ce logement.

Afin d'assurer le déplacement de la rampe vis-à-vis des parois du logement, l'ensemble d'accès selon l'invention est équipé de moyens d'entraînement qui ne sont pas représentés sur les présentes figures. Dans un mode de réalisation avantageux, ces moyens d'entraînement sont débrayables. En d'autres termes, dans certaines circonstances, il est possible de déplacer manuellement la rampe par rapport à son logement.

Conformément à une première variante de l'invention, cette rampe peut assurer uniquement une fonction de comble lacune, auquel cas elle se déploie de manière sensiblement horizontale. Selon une alternative, cette rampe peut au contraire assurer une fonction de rampe, à savoir qu'elle se déploie de manière inclinée de sorte que son bec d'accostage repose sur le quai. Selon une alternative supplémentaire, la rampe peut assurer indifféremment les deux fonctions ci-dessus.

Les différents éléments mécaniques constitutifs du logement et de la rampe, qui sont décrits dans les paragraphes précédents, sont de type connu en soi. Par conséquent, ils ne seront pas expliqués plus en détail dans ce qui suit.

Le seuil 5, formé au niveau de la surface supérieure du logement 1, comprend tout d'abord un corps fixe 50. Le rebord extérieur 52 du corps 50, opposé à l'axe médian de roulage, est creusé d'un renfoncement 54 délimitant une plage inférieure 55. Ce renfoncement assure la réception d'un nez 56, formant organe d'étanchéité comme on le verra dans ce qui suit. Ce nez 56 s'étend avantageusement sur une partie substantielle et, de préférence, sur la totalité de la longueur du seuil 5, en référence à l'axe médian de roulage. On note 57 le bord intérieur et 58 le bord extérieur du nez, en référence au dit axe médian.

Dans le premier mode de réalisation le bord intérieur 57 du nez 56 est articulé sur la face 60 du corps 50, laquelle borde le renfoncement 54. Cette face 60, qui est distante de l'extrémité 52, est dénommée face longitudinale d'articulation. Un arbre physique 62 s'étend le long de cette face 60, de manière à permettre la rotation du nez 56. Cette rotation est réalisée autour d'un axe géométrique, noté A57. Cet axe, qui passe par le bord intérieur 57, est par conséquent situé à distance du rebord extérieur 52 du seuil 5.

De manière à faciliter la rotation du nez 56 par rapport au corps 50, le nez comprend une succession de décrochements 64 et d'extensions 65, alors que le corps comprend de façon correspondante une succession de décrochements 66 et d'extension 67. De façon alternée, chaque extension 65 du nez pénètre dans un décrochement 66 du corps, alors que chaque extension 67 du corps pénètre dans un décrochement 64 du nez.

De façon avantageuse la largeur dite utile I56 du nez est comprise entre 10 millimètres (mm) et 60 mm, notamment entre 30 mm et 40 mm. Cette largeur utile, qui est prise perpendiculairement à l'axe médian XX, correspond à la portion du nez qui est susceptible de comprimer le joint 222.

Le volet 7 comprend une lame principale 70, dont l'extrémité dite supérieure 72 est articulée sur le rebord extérieur 52 du seuil 5. À cet effet, il est prévu un arbre physique 74 s'étendant le long de ce rebord, en étant parallèle à celui 62 assurant l'articulation du nez. La rotation de la lame 70 s'effectue autour d'un axe géométrique A7 qui est parallèle à celui A57 ci-dessus, en étant toutefois distinct de ce dernier. Au niveau de son extrémité supérieure 72, la lame 70 est prolongée par un becquet 76. Ce dernier, qui forme une came comme on le verra dans ce qui suit, s'étend de façon globalement radiale à partir de l'extrémité supérieure 72 du volet.

Entre son extrémité supérieure 72 et son extrémité inférieure 78, la lame 70 est pourvue d'une aile 80 intérieure, à savoir tournée vers l'axe médian de roulage. La rampe 5 et le volet 7 sont mutuellement liés, par l'intermédiaire d'une biellette 9. Une première extrémité 91 de cette biellette est articulée sur la rampe autour d'un axe A91, alors que son extrémité opposée 92 est articulée sur l'aile 80 du volet 7 autour d'un axe supplémentaire A92. De façon préférée, ces axes A91 et A92 sont mutuellement parallèles, tout en étant chacun parallèle à l'axe médian de roulage.

La mise en œuvre de l'ensemble d'accès I, tel que décrit ci-dessus, va maintenant être explicitée dans ce qui suit en référence aux figures 2 à 7.

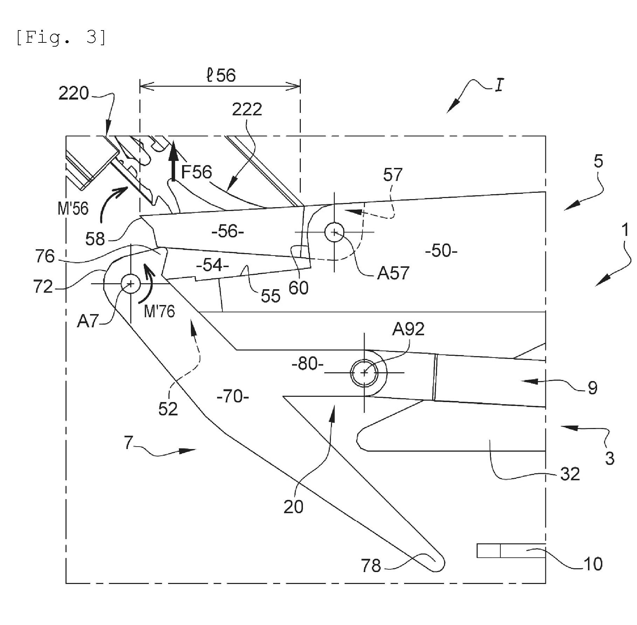

On suppose tout d'abord que, en référence aux figures 2 et 3, le volet 7 se trouve dans sa position de fermeture, dans laquelle il obture de façon habituelle la fenêtre 20 du logement 1. Par ailleurs le becquet du volet 7 s'étend vers le haut, de manière à relever de manière correspondante le nez 56, à distance de la plage 55. Ce nez exerce une force F56, orientée globalement vers le haut, sur un joint d'étanchéité 222, illustré partiellement, lequel appartient au vantail 220 de la porte 206. La compression du joint, sous l'effet de cette force F56, assure par conséquent une étanchéité satisfaisante. Cette configuration d'étanchéité de l'ensemble d'accès I correspond typiquement à une situation de roulage du véhicule, pour laquelle les vantaux des portes sont fermés.

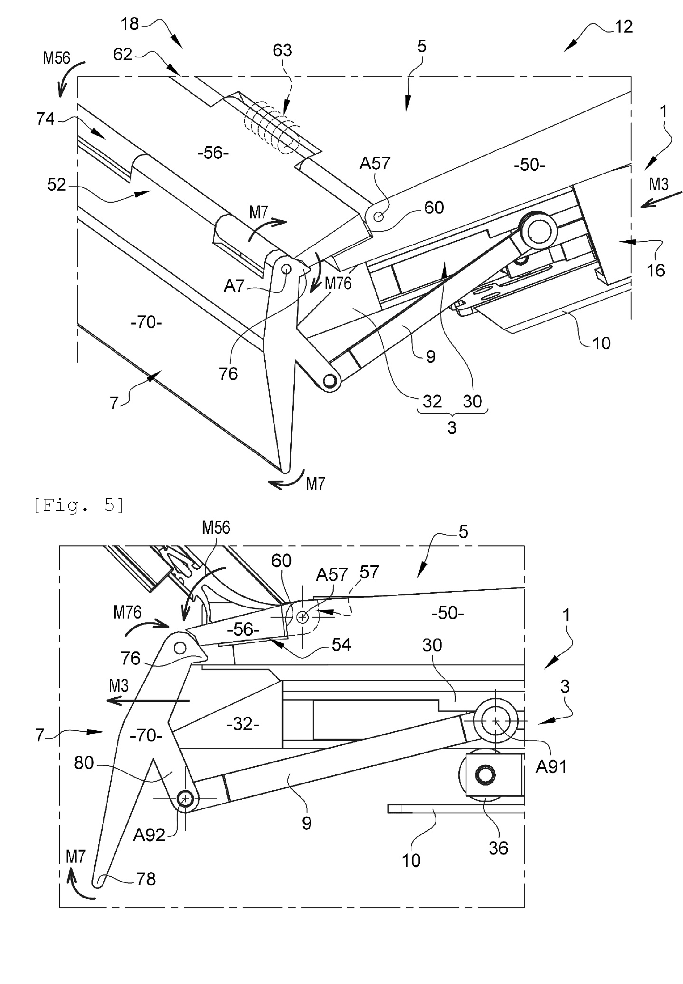

En référence désormais aux figures 4 et 5, on suppose maintenant que le véhicule de transport 200 se trouve face à un quai, de manière à pouvoir assurer l'embarquement et le débarquement des passagers. Dans ce cas la rampe 3 commence à se déployer, en étant mise en mouvement vers l'extérieur selon la flèche M3. Le bec d'accostage 32 repousse alors le volet, lequel pivote autour de l'axe A7, selon la flèche M7. De la sorte le becquet 76 est mis en mouvement selon la flèche M76, de manière à être déplacé vers le bas à partir de sa configuration relevée des figures 2 et 3.

Du fait de ce mouvement du becquet, le nez 56 pivote vers le bas autour de l'axe A57, selon la flèche M56, de manière à s'escamoter dans le renfoncement 54. Le déplacement du nez vers le bas peut s'effectuer sous la simple action de la gravité. En effet, étant donné qu'il n'est plus soutenu par le becquet 76, le nez s'abaisse alors du fait de son propre poids. Il s'agit cependant d'une solution moins préférée.

De manière avantageuse l'abaissement du nez est mis en œuvre sous l'action d'au moins un ressort de rappel, en particulier d'un ressort de torsion s'étendant autour de l'arbre 62. Un tel ressort de torsion, de type connu en soi, est représenté de manière schématique sur les figures 2 et 4 en étant affecté de la référence 63. La présence d'un tel ressort de rappel permet d'éviter que le nez ne fasse saillie de manière intempestive, ce qui serait alors susceptible d'entraver le déplacement correct des passagers.

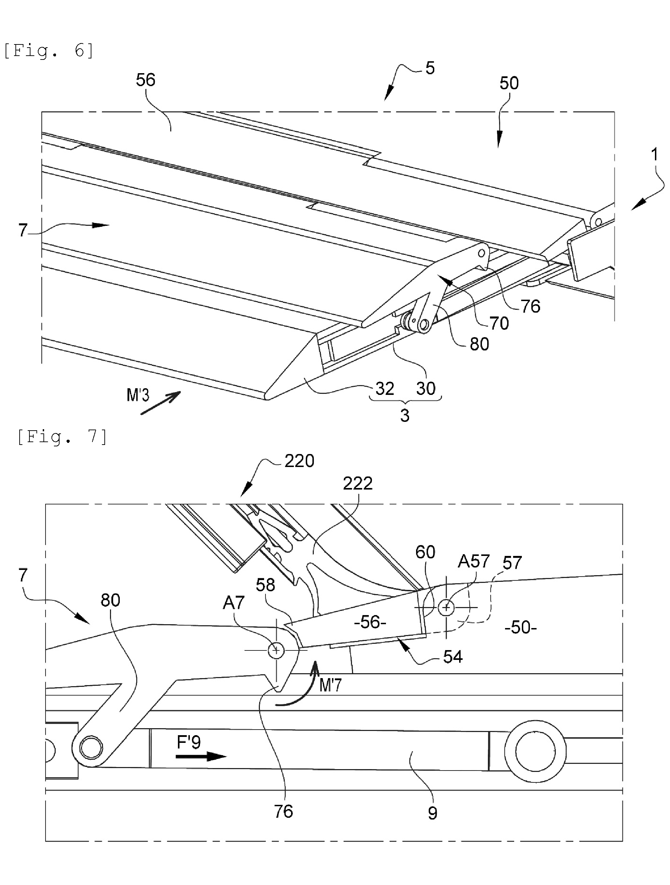

Les figures 6 et 7 illustrent une configuration partiellement déployée de la rampe, que cette dernière adopte à un stade intermédiaire de son mouvement selon la flèche M3. Le becquet 76 est dirigé vers le bas, en direction de la rampe 3, de sorte qu'il n'exerce plus aucune action mécanique sur le nez 56. Ce dernier est alors entièrement escamoté à l'intérieur du renfoncement 54, en venant au contact de la plage 55.

Si la rampe continue à être mise en mouvement selon la flèche M3, elle adopte une configuration entièrement déployée qui n'est pas représentée sur les figures. Le bec d'accostage 32 est alors situé au droit d'un quai non illustré, de sorte que la rampe assure une fonction de comble lacune. De façon classique il est possible de faire pivoter cette rampe, afin que le bec d'accostage vienne au contact du quai précité.

Comme le montrent les figures 6 et 7, dans la configuration partiellement déployée .de la rampe, la face supérieure du volet 7 assure une transition entre les faces supérieures de la rampe et du seuil, permettant un transit aisé des passagers, en particulier des personnes à mobilité réduite. Cette transition est également assurée dans la configuration entièrement déployée de la rampe, évoquée au paragraphe précédent. Par ailleurs, étant donné qu'il est escamoté dans le renfoncement, la face supérieure du nez 56 assure une transition entre les faces supérieures respectivement du corps fixe 50 et du volet 7.

On suppose désormais que l'on souhaite replier la rampe à l'intérieur de son logement, à partir de la configuration entièrement déployée. Il s'agit alors de mettre en mouvement la rampe selon la flèche M'3, visible notamment sur la figure 6, selon un sens inverse de celui matérialisé par la flèche M3 ci-dessus. Ce mouvement provoque un déplacement correspondant de la biellette 9, laquelle exerce une force F'9 sur l'aile 80 du volet 7. Le volet a tendance alors à pivoter vers le haut, selon la flèche M'7, autour de son axe A7.

En référence à nouveau aux figures 2 et 3, au terme du mouvement de la rampe selon la flèche M'3, le becquet 76 est relevé selon la flèche M'76. Ce becquet assure alors une fonction de came, de manière à faire pivoter vers le haut le nez 56 selon la flèche M'56. Ce pivotement, qui s'exerce à l'encontre du ressort de rappel 63, contribue à écarter le nez à l'opposé de la plage 55. Par ailleurs, le volet 78 obture à nouveau la fenêtre 20 du logement. On retrouve alors la configuration précédemment décrite en référence aux figures 2 et 3, dans laquelle le nez exerce la force F56 sur le joint 222, de manière à assurer une étanchéité satisfaisante.

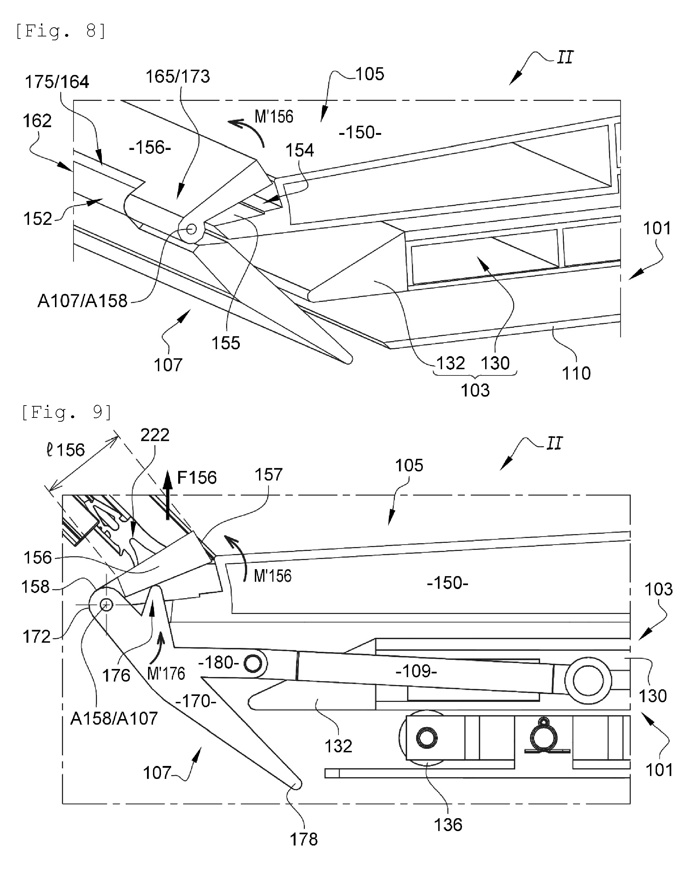

Les figures 8 à 11 illustrent un ensemble d'accès II, conforme à un second mode de réalisation de l'invention. Les éléments mécaniques de cet ensemble d'accès II, qui sont analogues à celui I du premier mode de révélation, sont affectés des mêmes numéros de référence augmentés du nombre 100.

L'ensemble d'accès Il diffère de celui I ci-dessus, tout d'abord en ce qui concerne la structure du nez 156. En effet, dans ce second mode de réalisation, le nez est articulé sur le rebord extérieur 152 du seuil 105, non pas via son bord intérieur comme ci-dessus, mais désormais par l'intermédiaire de son bord extérieur 158. L'axe géométrique d'articulation A158 du nez, passant par le bord extérieur 158 de ce dernier, est en outre confondu avec l'axe d'articulation A107 du volet sur le rebord extérieur 152 du seuil. Par conséquent, contrairement au premier mode de réalisation incluant deux arbres physiques d'articulation, il est prévu un unique arbre physique 162 permettant l'articulation à la fois du nez et du volet.

De manière à faciliter la coopération mutuelle du nez 156 et du volet 107, le nez comprend une succession de décrochements 164 et d'extensions 165, alors que le volet comprend de façon correspondante une succession de décrochements 173 et d'extensions 175. Le rebord extérieur 152 du seuil comprend également une succession de décrochements et d'extensions, qui ne sont pas représentés. De façon alternée, chaque extension 165 du nez pénètre à la fois dans un décrochement 173 du volet ainsi que dans un décrochement du seuil, alors que chaque extension 175 du volet pénètre à la fois dans un décrochement 164 du nez et dans un décrochement du seuil. De manière non représentée, chaque extension du seuil pénètre dans des décrochements en regard respectivement du volet et du nez. Enfin la largeur I156 du nez, dans ce second mode de réalisation, présente avantageusement les mêmes valeurs que celles mentionnées ci-dessus.

L'ensemble d'accès Il diffère de celui I ci-dessus, également en ce qui concerne la structure du volet. En effet la came 176 est déportée vers le bas, par rapport à l'extrémité supérieure 172 de la lame 170 du volet 107. Cette came est prévue dans une position intermédiaire, entre cette extrémité supérieure 172 et l'aile 180.

La mise en œuvre de l'ensemble d'accès II, selon le second mode de réalisation, est globalement analogue à celle décrite ci-dessus en référence au premier mode de réalisation.

Dans la position de fermeture du volet 107, illustrée sur les figures 8 et 9, sa came 176 est relevée. De la sorte, cette came repousse le nez 156 vers le haut, de sorte que ce dernier exerce une force F156 sur le joint 222. Cette configuration correspond à celle décrite en référence aux figures 2 et 3, pour le premier mode de réalisation ci-dessus.

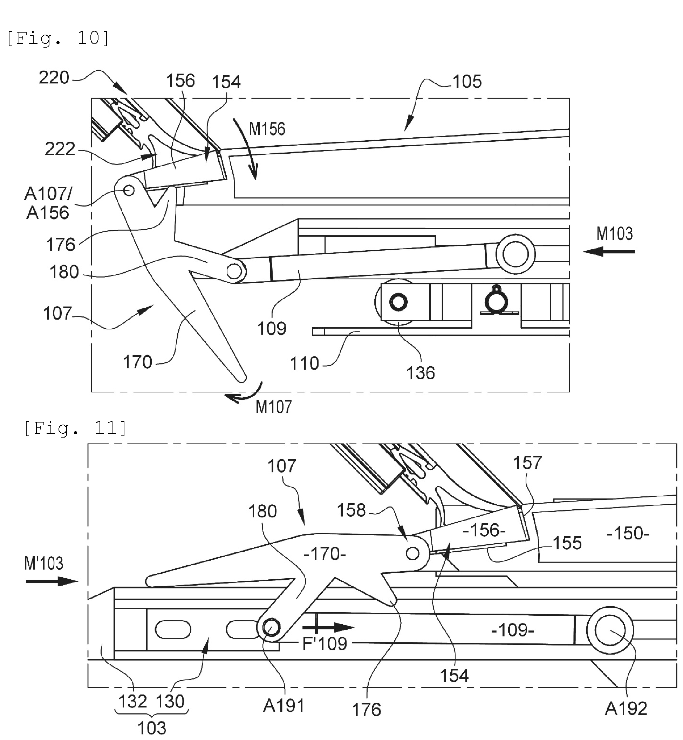

Lorsque la rampe 103 commence à se déployer vers l'extérieur selon la flèche M103 (voir figure 10), elle tend à faire pivoter le volet 107 autour de son axe A107, selon la flèche M107. Le nez 156 s'escamote alors dans le renfoncement 154, par gravité ou avantageusement sous l'effet d'un ressort de torsion non représenté. Cette situation correspond à celle décrite en référence aux figures 4 et 5, pour le premier mode de réalisation ci-dessus.

Lorsque la rampe 103 continue à se déployer, en particulier comme montré sur la figure 11, le nez 156 est entièrement escamoté à l'intérieur du renfoncement 154. La face supérieure du volet 107 forme une transition entre les faces supérieures, respectivement du seuil 105 et de la rampe 103. Cette configuration est analogue à celle décrite en référence aux figures 6 et 7, pour le premier mode de réalisation ci-dessus. Comme mentionné ci-dessus, si l'on continue à déployer la rampe, elle vient en regard d'un quai non représenté, de façon à assurer une fonction de comble lacune, voire de façon à venir au contact de ce quai.

Si l'on souhaite replier la rampe 103 à l'intérieur du logement 101, à partir de la configuration entièrement déployée, on la met en mouvement selon la flèche M'103 visible sur la figure 11. Cela provoque un déplacement correspondant de la biellette, qui exerce une force F'109 sur l'aile 180, de sorte que le volet 107 pivote vers le haut. Cela contribue à relever la came 176, puis à faire pivoter le nez 156 vers le haut, selon la flèche M'156 (voir à nouveau figures 8 et 9). On retrouve alors la configuration de ces figures 8 et 9, dans laquelle le nez comprime le joint 222, de manière à garantir une étanchéité satisfaisante.

L'invention s'accompagne de nombreux avantages, vis-à-vis de l'art antérieur présenté dans ce qui précède.

Tout d'abord les moyens de déplacement, qui permettent au volet de commander le mouvement du nez, permettent de s'affranchir de la présence d'un organe spécifique dévolu à l'actionnement de ce nez. L'invention assure donc une simplification mécanique vis-à-vis des solutions décrites dans DE 10 2016 125785 et DE 10 2014 208 288, lesquelles nécessitent au contraire de faire appel à un actionneur supplémentaire assurant la commande du nez.

Par ailleurs, les moyens de déplacement ci-dessus permettent de synchroniser les mouvements respectifs du volet et du nez. Dans ces conditions, lors de la fermeture des vantaux, on évite toute situation dans laquelle le nez serait au moins en partie relevée, entravant ainsi le libre transit des passagers. Cela est à comparer avec les enseignements de DE 10 2016 125785 et DE 10 2014 208 288, qui ne permettent pas de s'affranchir totalement de ce type de situation. En effet, dans ces solutions antérieures, un dysfonctionnement de l'actionneur dédié au nez peut entraîner le blocage intempestif de celui-ci dans une position au moins partiellement relevée.

Le premier mode de réalisation, dans lequel le nez est articulé sur le corps du seuil par son bord intérieur, présente des avantages spécifiques. Ce mode de réalisation permet notamment de faciliter la maintenance. Dans cet esprit le renfoncement 54 est aisément accessible depuis l'extérieur, pour en retirer d'éventuels gravillons ou analogues qui seraient susceptibles de gêner le bon fonctionnement du nez.

Le second mode de réalisation, dans lequel le nez est au contraire articulé sur le corps du seuil par son bord extérieur, présente des avantages spécifiques. Ce mode de réalisation permet notamment de simplifier la conception mécanique. Dans cet esprit, il intègre un unique arbre physique d'articulation.

## Revendications

1. Ensemble d'accès (I ; II) à un véhicule (200), notamment un véhicule de transport, comprenant
- un logement (1 ; 101) de réception d'une rampe mobile
- une rampe mobile (3 ; 103), qui est mobile en translation entre une position repliée dans le logement ainsi qu'une position dépliée en dehors du logement
- un seuil d'accès (5 ; 105) s'étendant au-dessus du logement (1 ; 101); et
- un volet (7 ; 107) mobile entre une position de fermeture dans laquelle il ferme une fenêtre (20 ; 120) du logement, et une position d'ouverture dans laquelle il assure une transition entre la rampe et le seuil d'accès,
- le seuil d'accès comportant un corps fixe (50 ; 150), ainsi qu'un organe mobile d'étanchéité (56 ; 156), ledit organe d'étanchéité étant mobile entre une position escamotée vers le bas, dans laquelle il assure une transition entre le corps fixe du seuil et le volet, ainsi qu'une position relevée dans laquelle il fait saillie vers le haut par rapport au corps, position relevée dans laquelle il est apte à coopérer avec un joint (222) porté par l'extrémité inférieure d'une porte (206) dudit véhicule, notamment en comprimant ledit joint,
cet ensemble d'accès étant **caractérisé en ce que** ledit volet (7 ; 107) comprend des moyens de déplacement (76 ; 176), permettant de déplacer ledit organe d'étanchéité (56 ; 156) depuis sa position escamotée vers sa position relevée, lorsque le volet se déplace respectivement depuis sa position d'ouverture vers sa position de fermeture.

2. Ensemble selon la revendication précédente, dans lequel le volet (7 ; 107) est monté de façon rotative par rapport au logement (1 ; 101) et les moyens de déplacement comprennent une came (76 ; 176) appartenant au volet, ladite came étant propre à déplacer l'organe d'étanchéité (56 ; 156) depuis sa position escamotée vers sa position relevée, lors de la rotation du volet.

3. Ensemble selon l'une des revendications précédentes, dans lequel l'organe d'étanchéité (56 ; 156) est monté rotatif par rapport au corps (50 ; 150) du seuil autour d'un premier axe longitudinal d'articulation (A57 ; A158).

4. Ensemble selon la revendication 2 prise en combinaison avec la revendication 3, dans lequel ledit premier axe longitudinal d'articulation (A57) s'étend à distance d'un second axe longitudinal d'articulation (A7), autour duquel le volet (7) est monté de manière rotative par rapport au logement, le bord intérieur (57) de l'organe d'étanchéité (56) étant notamment articulé sur le corps fixe (50), à distance du rebord extérieur (52) dudit corps fixe.

5. Ensemble selon la revendication 2 prise en combinaison avec la revendication 3, dans lequel ledit premier axe longitudinal d'articulation (A158) est confondu avec un second axe longitudinal d'articulation (A107), autour duquel le volet (107) est monté de manière rotative par rapport au logement, le bord extérieur (158) de l'organe d'étanchéité (156) étant notamment articulé sur le rebord extérieur (152) du corps fixe (150).

6. Ensemble selon l'une des revendications précédentes, comprenant en outre des moyens de rappel, notamment de rappel élastique (63), permettant de rappeler ledit organe d'étanchéité (56 ; 156) depuis sa position relevée vers sa position escamotée, en l'absence d'action du volet sur l'organe d'étanchéité.

7. Ensemble selon l'une des revendications précédentes, dans lequel le corps fixe (50 ; 150) est creusé d'un renfoncement (54 ; 154) ménagé au voisinage du rebord extérieur (52 ; 152) dudit corps, l'organe d'étanchéité (56 ; 156) étant reçu dans ce renfoncement, au moins dans sa position escamotée.

8. Ensemble selon l'une des revendications précédentes, dans lequel la largeur utile (I56 ; 1156) de l'organe d'étanchéité est comprise entre 10 mm et 60 mm, notamment entre 30 mm et 40 mm.

9. Véhicule de transport, notamment du type train, tramway, métro, bus ou encore trolleybus, comprenant au moins un ensemble d'accès conforme à l'une quelconque des revendications précédentes.
